(19) Europäisches Patentamt / European Patent Office / Office européen des brevets

(11) **EP 4 185 054 B1**

(12) **EUROPEAN PATENT SPECIFICATION**

(45) Date of publication and mention
of the grant of the patent:
**25.12.2024   Bulletin 2024/52**

(21) Application number: **20946660.6**

(22) Date of filing: **31.07.2020**

(51) International Patent Classification (IPC):
**H04W 72/12** $^{(2023.01)}$     **H04W 28/22** $^{(2009.01)}$
**H04W 72/51** $^{(2023.01)}$

(52) Cooperative Patent Classification (CPC):
**H04W 72/51;** H04W 28/22; H04W 72/20

(86) International application number:
**PCT/CN2020/106321**

(87) International publication number:
**WO 2022/021373 (03.02.2022 Gazette 2022/05)**

(54) **COMMUNICATION METHOD AND APPARATUS**

KOMMUNIKATIONSVERFAHREN UND -VORRICHTUNG

PROCÉDÉ ET APPAREIL DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.05.2023   Bulletin 2023/21**

(73) Proprietor: **Huawei Technologies Co., Ltd.**
**Shenzhen, Guangdong 518129 (CN)**

(72) Inventor: **FENG, Shulan**
**Shenzhen, Guangdong 518129 (CN)**

(74) Representative: **Maiwald GmbH**
**Engineering**
**Elisenhof**
**Elisenstrasse 3**
**80335 München (DE)**

(56) References cited:
EP-A1- 3 562 198     WO-A1-2020/076226
CN-A- 1 717 900     CN-A- 101 345 988
CN-A- 101 350 941     CN-A- 107 484 251
CN-A- 107 484 251

• **SAMSUNG: "Corrections on DL/UL Resource Allocation", vol. RAN WG1, no. Busan, Korea; 20180521 - 20180525, 11 May 2018 (2018-05-11), XP051461944, Retrieved from the Internet <URL:http://www.3gpp.org/ftp/tsg%5Fran/WG1%5FRL1/TSGR1%5F93/Docs> [retrieved on 20180511]**

## Description

### TECHNICAL FIELD

This application relates to the field of wireless communication technologies, and in particular, to a communication method and apparatus.

### BACKGROUND

In a current mobile communication system, a peak data transmission rate of an air interface depends on a quantity of layers of data transmitted over the air interface, a modulation order, a bit rate, a scheduled bandwidth, and an overhead (overhead) value of the system.

WO2020/076226A1 describes a method performed by a network entity, the method comprising: transmitting or receiving a transmission of data, wherein the transmission is scheduled with a Modulation and Coding Scheme, MCS, level indicated by an MCS index, IMCS, and wherein the transmitting or receiving is based on a first condition being used for a first subset of MCS levels being a subset of all possible MCS levels.

An overhead value used for calculating a current peak rate is a fixed value related to a transmission direction and a transmission band. The overhead value is an average value calculated based on an average overhead of the system. Even if a terminal supports a lower overhead, a base station can schedule data based on only the fixed overhead value. As a result, an instantaneous peak throughput of the air interface cannot reach a maximum throughput supported by the terminal. That is, the overhead is also used during scheduling in a conventional technology to limit a maximum instantaneous scheduling rate. As a result, the average overhead becomes the lowest overhead for scheduling, and an actual average peak rate is lower than an expected peak rate. A new radio (new radio, NR) system of the third generation partnership project (the 3rd generation partnership project, 3GPP) is used as an example, an overhead value supported by 3GPP 38.306 is not less than 0.14. In an example of downlink, even if an overhead of a currently scheduled PDSCH is less than 0.14, for example, only 0.07, the base station can limit, based on only the overhead of 0.14, a quantity of information bits that can be carried, resulting in reduction of the instantaneous peak throughput of the air interface.

### SUMMARY

This application provides a communication method and apparatus, to improve a peak throughput of an air interface.

Appended claim 1 defines a communication method applied to a terminal device. Appended claim 5 defines a communication method applied to a network device. Appended claim 9 defines a communication apparatus. Appended claims 10 defines a computer program product. Appended claim 11 defines a chip. Appended claim 12 defines a computer-readable storage medium. The invention and its scope of protection is defined by these independent claims. The following aspects and implementations of the disclosure provide examples of combinations of techncial subject matters.

According to a first aspect, an embodiment of this application provides a communication method. The method may be performed by a terminal device or a component (for example, a processor, a chip, or a chip system) in a terminal device.

The following uses an example in which an execution body is a terminal device for description. According to the method, the terminal device can determine first capability information, where the first capability information indicates that a transmission rate supported by the terminal device meets a rate condition, or the first capability information may indicate that an overhead supported by the terminal device is less than a specified overhead. The terminal device can further send the first capability information to a network device.

The rate condition includes one or more of the following conditions: The transmission rate supported by the terminal device exceeds a first data rate, where the first data rate is related to the specified overhead; or a transmission rate of single-carrier scheduling supported by the terminal device exceeds a second data rate, where the second data rate is related to the specified overhead; or a sum of transmission rates of serving cells in all band combinations within a scheduled frequency range supported by the terminal device exceeds a third data rate, where the third data rate is related to the specified overhead.

By using the method, the terminal device can report capability information to the network device based on a capability of the terminal device, to enable the network device to learn that the terminal device supports a peak data rate higher than a peak data rate determined based on the specified overhead, or enable the network device to learn that the terminal device supports an overhead lower than the specified overhead, so that when scheduling data of the terminal device, the network device performs scheduling based on an overhead lower than the specified overhead, instead of performing scheduling based on only the specified overhead in the conventional technology, to increase a network throughput.

In a possible design, the terminal device can further receive scheduling information from the network device. A maximum data rate corresponding to the scheduling information exceeds the first data rate; or a transmission rate of single-carrier scheduling corresponding to the scheduling information exceeds the second data rate; or a sum of transmission rates of serving cells in all band combinations within a scheduled frequency range corresponding to the scheduling information exceeds the third data rate, where the third data rate is related to the specified overhead.

By using the design, a peak rate of a single carrier and/or a peak rate of a single carrier in a case of under-full-capability scheduling carrier aggregation can be increased.

In a possible design, the first capability information indicates that the terminal device supports the transmission rate in a whole band range; or the first information indicates that the terminal device supports the transmission rate in one or more frequency ranges supported by the terminal device; or the first information indicates that the terminal device supports the transmission rate in one or more band combinations supported by the terminal device; or the first information indicates that the terminal device supports the transmission rate in one or more bands supported by the terminal device; or the first information indicates that the terminal device supports the transmission rate on one or more carriers supported by the terminal device.

By using the design, the terminal device can flexibly report, based on a frequency range to which the first capability information is applicable, whether the transmission rate meeting the rate condition is supported and whether the overhead less than the specified overhead is supported within the frequency range, to support scheduling manners based on different overheads in different frequency ranges, so as to implement flexible scheduling.

In a possible design, the first capability information includes uplink first capability information and/or downlink first capability information. The uplink first capability information indicates that an uplink transmission rate supported by the terminal device meets the rate condition or indicates that an uplink overhead supported by the terminal device is less than the specified overhead. The uplink first capability information indicates that a downlink transmission rate supported by the terminal device meets the rate condition or indicates that a downlink overhead supported by the terminal device is less than the specified overhead.

By using the design, the terminal device can respectively report the first capability information based on uplink transmission and downlink transmission, to flexibly report whether the uplink transmission and the downlink transmission support the transmission rates meeting the rate condition and whether the overheads less than the specified overhead are supported, so as to support scheduling manners based on different overheads for the uplink transmission and the downlink transmission, thereby implementing flexible scheduling.

According to a second aspect, an embodiment of this application provides a communication method. The method may be performed by a network device or a component (for example, a processor, a chip, or a chip system) in a network device.

The following uses an example in which an execution body is a network device for description. According to the method, the network device can receive first capability information from a terminal device, where the first capability information indicates that a transmission rate supported by the terminal device meets a rate condition, or the first capability information may indicate that an overhead supported by the terminal device is less than a specified overhead. The terminal device sends the first capability information to the network device.

The rate condition includes one or more of the following conditions: The transmission rate supported by the terminal device exceeds a first data rate, where the first data rate is related to the specified overhead; or a transmission rate of single-carrier scheduling supported by the terminal device exceeds a second data rate, where the second data rate is related to the specified overhead; or a sum of transmission rates of serving cells in all band combinations within a scheduled frequency range supported by the terminal device exceeds a third data rate, where the third data rate is related to the specified overhead.

In a possible design, the network device can further send scheduling information to the terminal device based on the first capability information, or the network device can send scheduling information to the terminal device in response to the first capability information. A maximum data rate corresponding to the scheduling information exceeds the first data rate; or a transmission rate of single-carrier scheduling corresponding to the scheduling information exceeds the second data rate; or a sum of transmission rates of serving cells in all band combinations within a scheduled frequency range corresponding to the scheduling information exceeds the third data rate, where the third data rate is related to the specified overhead.

In a possible design, the first capability information indicates that the terminal device supports the transmission rate in a whole band range; or the first information indicates that the terminal device supports the transmission rate in one or more frequency ranges supported by the terminal device; or the first information indicates that the terminal device supports the transmission rate in one or more band combinations supported by the terminal device; or the first information indicates that the terminal device supports the transmission rate in one or more bands supported by the terminal device; or the first information indicates that the terminal device supports the transmission rate on one or more carriers supported by the terminal device.

In a possible design, the first capability information includes uplink first capability information and/or downlink first capability information. The uplink first capability information indicates that an uplink transmission rate supported by the terminal device meets the rate condition or indicates that an uplink overhead supported by the terminal device is less than the specified overhead. The uplink first capability information indicates that a downlink transmission rate supported by the terminal device meets the rate condition or indicates that a downlink overhead supported by the terminal device is less than the specified overhead.

According to a third aspect, an embodiment of this application provides a communication apparatus, which can implement the method implemented by the terminal device in the first aspect or any one of the possible implementations of the first aspect. The apparatus includes corresponding units or components configured to perform the method. The units included in the apparatus may be implemented by using software and/or hardware. The apparatus may be, for example, a terminal device, or a chip, a chip system, a processor, or the like that can support a terminal device in implementing the method.

For example, a structure of the communication apparatus includes a processor and a transceiver. The processor is configured to support the communication apparatus in executing corresponding functions of the terminal device in the first aspect or various possible design examples of the first aspect, for example, generating information that needs to be sent by the transceiver, such as first capability information, and/or processing information received by the transceiver. The transceiver may be configured to send and receive information or data and perform communication interaction between the communication apparatus and another communication apparatus (for example, a network device) in a network system. Optionally, the transceiver may be externally connected to the communication apparatus. Optionally, the communication apparatus may further include a memory. The memory is coupled to the processor and configured to store program instructions and data necessary to the communication apparatus, where the memory may be used as one of the components of the communication apparatus or externally connected to the communication apparatus.

During implementation of the method described in the first aspect, the processor may be configured to determine first capability information, where the first capability information indicates that a transmission rate supported by the communication apparatus meets a rate condition or indicates that an overhead supported by the communication apparatus is less than a specified overhead. The transceiver may further be configured to send the first capability information to a network device.

The rate condition includes one or more of the following conditions: The transmission rate supported by the terminal device exceeds a first data rate, where the first data rate is related to the specified overhead; or a transmission rate of single-carrier scheduling supported by the terminal device exceeds a second data rate, where the second data rate is related to the specified overhead; or a sum of transmission rates of serving cells in all band combinations within a scheduled frequency range supported by the terminal device exceeds a third data rate, where the third data rate is related to the specified overhead.

In a possible design, the transceiver may further receive scheduling information from the network device. A maximum data rate corresponding to the scheduling information exceeds the first data rate; or a transmission rate of single-carrier scheduling corresponding to the scheduling information exceeds the second data rate; or a sum of transmission rates of serving cells in all band combinations within a scheduled frequency range corresponding to the scheduling information exceeds the third data rate, where the third data rate is related to the specified overhead.

In a possible design, the first capability information indicates that the terminal device supports the transmission rate in a whole band range; or the first information indicates that the terminal device supports the transmission rate in one or more frequency ranges supported by the terminal device; or the first information indicates that the terminal device supports the transmission rate in one or more band combinations supported by the terminal device; or the first information indicates that the terminal device supports the transmission rate in one or more bands supported by the terminal device; or the first information indicates that the terminal device supports the transmission rate on one or more carriers supported by the terminal device.

In a possible design, the first capability information includes uplink first capability information and/or downlink first capability information. The uplink first capability information indicates that an uplink transmission rate supported by the terminal device meets the rate condition or indicates that an uplink overhead supported by the terminal device is less than the specified overhead. The uplink first capability information indicates that a downlink transmission rate supported by the terminal device meets the rate condition or indicates that a downlink overhead supported by the terminal device is less than the specified overhead.

In another possible example, the structure of the communication apparatus may further include a communication module, a processing module, and the like. The modules may execute corresponding functions of the terminal device in the first aspect or various possible design examples of the first aspect. The processing module may be configured to perform the steps performed by the processor in the third aspect, and the communication module may be configured to perform the steps performed by the transceiver in the third aspect.

According to a fourth aspect, an embodiment of this application provides a communication apparatus, which can implement the method implemented by the network device in the second aspect or any one of the possible implementations of the second aspect. The apparatus includes corresponding units or components configured to perform the method. The units included in the apparatus may be implemented by using software and/or hardware. The apparatus may be, for example, a network device, or a chip, a chip system, a processor, or the like that can support a network device in implementing the method.

For example, a structure of the communication apparatus includes a processor and a transceiver. The processor is configured to support the communication apparatus in executing corresponding functions of the network device in the second aspect or various possible design examples of the second aspect, for example, generating information that needs to be sent by the transceiver, and/or processing information received by the transceiver. The transceiver may be configured to send and receive information or data and perform communication interaction between the communication apparatus and another communication apparatus (for example, a network device) in a network system. Optionally, the transceiver may be externally connected to the communication apparatus. Optionally, the communication apparatus may further include a memory. The memory is coupled to the processor and configured to store program instructions and data necessary to the communication apparatus, where the memory may be used as one of the components of the communication apparatus or externally connected to the communication apparatus.

During implementation of the method shown in the second aspect, the transceiver may be configured to receive first capability information from a terminal device, where the first capability information may indicate whether a transmission rate supported by the terminal device meets a rate condition or indicate that an overhead supported by the terminal device is less than a specified overhead.

The rate condition includes one or more of the following conditions: The transmission rate supported by the terminal device exceeds a first data rate, where the first data rate is related to the specified overhead; or a transmission rate of single-carrier scheduling supported by the terminal device exceeds a second data rate, where the second data rate is related to the specified overhead; or a sum of transmission rates of serving cells in all band combinations within a scheduled frequency range supported by the terminal device exceeds a third data rate, where the third data rate is related to the specified overhead.

In a possible design, the transceiver may further be configured to send scheduling information to the terminal device. A maximum data rate corresponding to the scheduling information exceeds the first data rate; or a transmission rate of single-carrier scheduling corresponding to the scheduling information exceeds the second data rate; or a sum of transmission rates of serving cells in all band combinations within a scheduled frequency range corresponding to the scheduling information exceeds the third data rate, where the third data rate is related to the specified overhead. It should be understood that the processor may generate the scheduling information based on the first capability information, or the processor may generate the scheduling information in response to the first capability information.

In a possible design, the first capability information indicates that the terminal device supports the transmission rate in a whole band range; or the first information indicates that the terminal device supports the transmission rate in one or more frequency ranges supported by the terminal device; or the first information indicates that the terminal device supports the transmission rate in one or more band combinations supported by the terminal device; or the first information indicates that the terminal device supports the transmission rate in one or more bands supported by the terminal device; or the first information indicates that the terminal device supports the transmission rate on one or more carriers supported by the terminal device.

In a possible design, the first capability information includes uplink first capability information and/or downlink first capability information. The uplink first capability information indicates that an uplink transmission rate supported by the terminal device meets the rate condition or indicates that an uplink overhead supported by the terminal device is less than the specified overhead. The uplink first capability information indicates that a downlink transmission rate supported by the terminal device meets the rate condition or indicates that a downlink overhead supported by the terminal device is less than the specified overhead.

In another possible example, the structure of the communication apparatus may further include a communication module, a processing module, and the like. The modules may execute corresponding functions of the network device in the second aspect or various possible design examples of the second aspect. The processing module may be configured to perform the steps performed by the processor in the fourth aspect, and the communication module may be configured to perform the steps performed by the transceiver in the fourth aspect.

According to a fifth aspect, an embodiment of this application provides a communication system. The communication system may include the communication apparatus provided in the third aspect and the communication apparatus provided in the fourth aspect.

For example, an example in which the communication apparatus provided in the third aspect is a terminal device and the communication apparatus provided in the fourth aspect is a network device is used. In the communication system, the terminal device can determine first capability information and send the first capability information to the network device, where the first capability information may indicate that a transmission rate supported by the terminal device meets a rate condition or indicate that an overhead supported by the terminal device is less than a specified overhead.

The rate condition includes one or more of the following conditions: The transmission rate supported by the terminal device exceeds a first data rate, where the first data rate is related to the specified overhead; or a transmission rate of single-carrier scheduling supported by the terminal device exceeds a second data rate, where the second data rate is related to the specified overhead; or a sum of transmission rates of serving cells in all band combinations within a scheduled frequency range supported by the terminal device exceeds a third data rate, where the third data rate is related to the specified overhead.

According to a sixth aspect, this application provides a computer storage medium, storing a program or instructions. When the program or the instructions are invoked and executed on a computer, the computer is enabled to perform the method in the first aspect or any one of the possible designs of the first aspect or the method in the second aspect or any one of the possible designs of the second aspect.

According to a seventh aspect, this application provides a computer program product, including a program or instructions. When the computer program product runs on a computer, the computer is enabled to perform the method in the first aspect or any one of the possible designs of the first aspect or the method in the second aspect or any one of the possible designs of the second aspect.

According to an eighth aspect, this application provides a chip or a chip system including a chip, where the chip may include a processor. The chip may further include a memory (or a storage module) and/or a transceiver (or a communication module). The chip may be configured to perform the method in the first aspect or any one of the possible designs of the first aspect or the method in the second aspect or any one of the possible designs of the second aspect. The chip system may be formed by the chip or may include the chip and another discrete component, for example, a memory (or a memory module) and/or a transceiver (or a communication module).

For beneficial effects of the second aspect to the eighth aspect and the possible designs thereof, refer to the descriptions of the beneficial effects of the method in the first aspect and any one of the possible designs thereof.

## BRIEF DESCRIPTION OF DRAWINGS

FIG. 1 is a schematic diagram of an architecture of a communication system according to an embodiment of this application;

FIG. 2 is a schematic flowchart of a communication method according to an embodiment of this application;

FIG. 3 is a schematic flowchart of a communication method according to an embodiment of this application;

FIG. 4 is a schematic diagram of a structure of a communication apparatus according to an embodiment of this application; and

FIG. 5 is a schematic diagram of a structure of a communication apparatus according to an embodiment of this application.

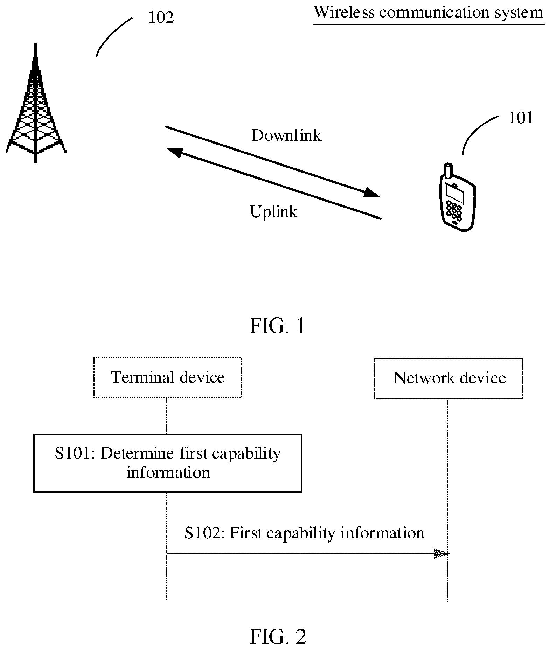

The embodiments of Figs. 2-4 and their associated text are part of the invention and covered by the claims. All other exemplary embodiments disclosed below are merely explanatory, and are not part of the invention.

## DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment.

As shown in FIG. 1, a communication method provided in an embodiment of this application is applicable to a wireless communication system. The wireless communication system may include a terminal device 101 and a network device 102.

It should be understood that the wireless communication system is applicable to both a low frequency scenario (sub 6G) and a high frequency scenario (above 6G). Application scenarios of the wireless communication system include, but are not limited to, a fifth generation system, a new radio (new radio, NR) communication system, a future evolved public land mobile network (public land mobile network, PLMN) system, and the like.

The terminal device 101 shown above may be user equipment (user equipment, UE), a terminal (terminal), an access terminal, a terminal unit, a terminal station, a mobile station (mobile station, MS), a remote station, a remote terminal, a mobile terminal (mobile terminal), a wireless communication device, a terminal agent, a terminal device, or the like. The terminal device 101 may have a wireless receiving and sending function and can perform communication (for example, wireless communication) with one or more network devices of one or more communication systems, and receive network services provided by the network devices. The network device herein includes, but is not limited to, the network device 102 shown in the figure.

The terminal device 101 may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device, a terminal apparatus in a future 5G network, or a terminal apparatus in a future evolved PLMN network, and or the like.

In addition, the terminal device 101 may be deployed on land, including an indoor or outdoor scenario and a handheld or on-board scenario; or the terminal device 101 may be deployed on a water surface (for example, on a steamship); or the terminal device 101 may be deployed in the air (for example, on an aircraft, a balloon, or a satellite). The terminal device 101 may be specifically a mobile phone (mobile phone), a tablet computer (pad), a computer with a wireless receiving and sending function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal device 101 may be a communication chip having a communication module, or may be a vehicle having a communication function, an in-vehicle device (for example, an in-vehicle communication apparatus or an in-vehicle communication chip), or the like.

The network device 102 may be an access network device (or referred to as an access network station). The access network device refers to a device, for example, a base station of a radio access network (radio access network, RAN), that provides a network access function. The network device 102 may specifically include a base station (base station, BS), or include a base station, a radio resource management device configured to control a base station, and the like. The network device 102 may further include a relay station (a relay device), an access point, a base station in a 5G network, a base station or an NR base station in a future evolved PLMN network, and the like. The network device 102 may be a wearable device or an in-vehicle device. The network device 102 may alternatively be a communication chip having a communication module.

For example, the network device 102 includes, but is not limited to, a next generation gNodeB (gnodeB, gNB) in 5G, an evolved node B (evolved node B, eNB) in an LTE system, a radio network controller (radio network controller, RNC), a radio controller in a CRAN system, a base station controller (base station controller, BSC), a home base station (for example, a home evolved nodeB or a home node B, HNB), a baseband unit (baseBand unit, BBU), a transmitting and receiving point (transmitting and receiving point, TRP), a transmitting point (transmitting point, TP), a mobile switching center, and the like. The network device 102 may further include a base station in a future 6G or updated mobile communication system. It should be understood that the network device 102 may alternatively be a scheduling node having a scheduling capability or a component of a scheduling node. The scheduling node is, for example, a terminal.

Based on the architecture shown in FIG. 1, the network device 102 may schedule uplink and/or downlink air interface transmission data of the terminal device 101. A data transmission rate (or referred to as a data rate, a transmission rate, or a rate) of an air interface depends on a quantity of layers of data transmitted over the air interface, a modulation order, a bit rate, a scheduled bandwidth, and an overhead value of a system. 3GPP NR is used as an example. A peak rate of a terminal device that is specified in 3GPP 38.306 is defined according to the following formula:

$$\textbf{\textit{data rate (in Mbps)}} = 10^{-6} \cdot \sum_{j=1}^{J} \left( v_{Layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot \left( 1 - OH^{(j)} \right) \right) \quad \text{formula}$$

(1),

where

a unit of the rate is megabits per second (Mbps). *J* is a quantity of component carriers in a band (band) or a band combination, *j* represents each band or each band combination, and *j*=1, 2, ..., or J. $R_{max}$=948/1024, which represents a maximum encoding rate.

In addition, in the formula (1), $v_{Layers}^{(j)}$ represents a maximum number of supported layers (the maximum number of supported layers) of a component carrier (component carrier, CC) j configured by a higher layer. $Q_m^{(j)}$ represents a maximum supported modulation order (the maximum supported modulation order) of the component carrier j configured by the higher layer. $f^{(j)}$ is a linear scaling factor (scaling factor) of the component carrier j configured by the higher layer, which is 1, 0.8, 0.75, or 0.4. $\mu$ is a value corresponding to a subcarrier spacing, the value of $\mu$ may be 0, 1, 2, or 3, which respectively corresponds to a 15 kilohertz (kHz) subcarrier spacing, a 30 kHz subcarrier spacing, a 60 kHz subcarrier spacing, and a 120 kHz subcarrier spacing. $T_s^{\mu}$ is an average length of orthogonal frequency-division multiplexing (orthogonal frequency-division multiplexing, OFDM) symbols in one subframe corresponding to $\mu$, where $T_s^{\mu} = \dfrac{10^{-3}}{14 \cdot 2^{\mu}}$

. $OH^{(j)}$ is an overhead of the component carrier j. $N_{PRB}^{BW(j),\mu}$ is a maximum quantity of resource blocks (resource blocks, RBs) in a signal bandwidth $BW^{(j)}$ of the component carrier j corresponding to $\mu$.

For downlink transmission in a frequency range (frequency range) FR1, $OH^{(j)}$ =0.14; for uplink transmission in the frequency range FR1, $OH^{(j)}$ =0.18; for downlink transmission in a frequency range FR2, $OH^{(j)}$ =0.08; and for uplink transmission in the frequency range FR2, $OH^{(j)}$ =0.10. It should be understood that in this application, $OH^{(j)}$ =0.14 defined above may be referred to as a specified overhead. In a 3GPP protocol, the frequency ranges FR1 and FR2 are defined in the following table.

**Table 1**

| Definition of frequency range | Value of corresponding frequency range |
| --- | --- |
| FR1 | 410 MHz to 7125 MHz |
| FR2 | 24250 MHz to 52600 MHz |

It should be understood that in this application, $OH^{(j)}$ =0.14 may be referred to as a specified overhead in the downlink transmission in FR1 or $OH^{(j)}$ =0.08 may be referred to as a specified overhead in the downlink transmission in FR2. It may be understood that $OH^{(j)}$ =0.14 is the specified overhead in the downlink transmission in FR1, and a corresponding data rate (that is, a data rate determined based on 0.14) is a first data rate in the downlink transmission in FR1. Correspondingly, $OH^{(j)}$ =0.18 is a specified overhead in the uplink transmission in FR1, and a data rate corresponding to the specified overhead is a first data rate in the uplink transmission in FR1; $OH^{(j)}$ =0.08 is the specified overhead in the downlink transmission in FR2, and a data rate corresponding to the specified overhead is a first data rate in the downlink transmission in FR2; and $OH^{(j)}$ =0.10 is a specified overhead in the uplink transmission in FR2, and a data rate corresponding to the specified overhead is a first data rate in the uplink transmission in FR2. For brief description, the downlink transmission in FR1 is used as an example in this application. It can be understood that the specified overhead and the first data rate have different values in different frequency ranges and different transmission directions.

For example, in the downlink transmission in the frequency range FR1, a maximum bandwidth of a single carrier is 100 MHz (MHz), and an air interface peak rate is shown in the following table.

**Table 2**

| Quantity of multiple input multiple output (multi input multi output, MIMO) layers | Highest modulation order | Linear scaling factor | Maximum bandwidth | Quantity of carriers | Peak rate/ Unit: gigabits per second (Gbps) |
| --- | --- | --- | --- | --- | --- |
| 4 | 256 quadrature amplitude modulation (quadrature amplitude modulation, QAM) | 1 | 100 MHz | 1 | 2.35 |
| 4 | 256-QAM | 1 | 100 MHz | 2 | 4.7 |

It should be understood that, according to a conventional technology, a peak rate of data transmitted by the network device 102 and the terminal device 101 over an air interface does not exceed the peak rate of a terminal device that is defined in the formula (1).

In addition, according to the formula (1), scheduling by the network device 102 on the terminal device 101 in a transport block of one carrier meets the following formula (2):

$$\frac{\sum_{m=0}^{M-1} V_{j,m}}{L \times T_s^{\mu}} \leq \text{DataRateCC} \qquad\qquad \text{formula (2)},$$

where

*DataRateCC* represents a maximum data rate, calculated according to the formula (1), supported by a terminal device on one carrier of one serving cell in one band, and the rate may be referred to as a transmission rate of single-carrier scheduling in this application with a unit of Mbps.

*L* is a quantity of time domain symbols of a scheduled physical downlink shared channel (physical downlink shared channel, PDSCH) or physical uplink shared channel (physical uplink shared channel, PUSCH). *M* is a quantity of transport blocks (transport block, TB) of the PDSCH or the PUSCH. $T_s^{\mu} = \frac{10^{-3}}{2^{\mu} \cdot N_{symb}^{slot}}$ is time of each symbol, where $\mu$ is a numerical representation of a subcarrier spacing of the PDSCH or the PUSCH. If the subcarrier spacing is 15 kHz, $\mu$=0; if the subcarrier spacing is 30 kHz, $\mu$=1; if the subcarrier spacing is 60 kHz, $\mu$=2; if the subcarrier spacing is 120 kHz, $\mu$=3; if the subcarrier spacing is 240 kHz, $\mu$=4; if the subcarrier spacing is 480 kHz, $\mu$=5; and the like.

For an $m^{th}$ TB, $V_{j,m} = C' \cdot \left\lfloor \frac{A}{C} \right\rfloor$, where A is a quantity of bits of the transport block, C is a total quantity of code blocks of the transport block, and C' is a quantity of scheduled code blocks of the transport block. $\lfloor \ \rfloor$ represents rounding down.

It should be understood that in this application, $OH^{(j)}$ =0.14 may be referred to as a specified overhead, and *DataRateCC* determined based on the overhead may be referred to as a second data rate.

On the basis of the formula (1), during multi-carrier scheduling, total scheduling by the network device 102 on the terminal device 101 in one cell group meets the following formula (3):

$$\sum_{j=0}^{J-1} \frac{\sum_{m=0}^{M-1} V_{j,m}}{T_{slot}^{\mu(j)}} \leq \text{DataRate} \qquad\qquad \text{formula (3)},$$

where

*DataRate* is a maximum value, calculated according to the formula (1), of a sum of data rates of configured serving cells in all band combinations supported by a terminal device in one band range, and the rate may be referred to as a sum of transmission rates of serving cells in all band combinations within a scheduled frequency range supported by the terminal device with a unit of Mbps in this application.

J is a quantity of configured cells in a frequency range in a cell group (a cell and a carrier have a same meaning in this application). For a $j^{th}$ cell, *M* is a quantity of TBs of the PDSCH or the PUSCH that are transmitted over a slot $s_j$, $T_{slot}^{\mu(j)} = 10^{-3}/2^{\mu(j)}$ is time of the $j^{th}$ cell in the slot $s_j$, and is time of each symbol. $\mu(j)$ is a numerical representation of a subcarrier spacing of the $j^{th}$ cell in the slot $s_j$. If the subcarrier spacing is 15 kHz, $\mu(j)$=0; if the subcarrier spacing is 30 kHz, $\mu(j)$=1; if the subcarrier spacing is 60 kHz, $\mu(j)$=2; if the subcarrier spacing is 120 kHz, $\mu(j)$=3; if the subcarrier spacing is 240 kHz, $\mu(j)$=4; if the subcarrier spacing is 480 kHz, $\mu(j)$=5; and the like.

For an $m^{th}$ TB, $V_{j,m} = C' \cdot \left\lfloor \frac{A}{C} \right\rfloor$, where A is a quantity of bits of the transport block, C is a total quantity of code blocks of the transport block, and C' is a quantity of scheduled code blocks of the transport block.

It should be understood that in this application, $OH^{(j)}$ =0.14 may be referred to as a specified overhead, and *DataRate* determined based on the overhead may be referred to as a third data rate.

Currently, the overhead value $OH^{(j)}$ used for calculating the peak rate according to the formula (1) is a fixed value related to a transmission direction and a transmission band, and the overhead value is an average value calculated based on an average overhead of the system. However, each time of scheduling in a conventional technology needs to meet the formula (2) and the formula (3). Consequently, in an example of downlink, even if an overhead of a currently scheduled PDSCH is less than 0.14, for example, only 0.07 (or 1/14), a quantity of information bits that can be carried can be limited based on only the overhead of 0.14, resulting in reduction of an instantaneous peak throughput of the air interface. For example, according to an original intention of a 5G NR design, a maximum bit rate of NR may be 948/1024=0.93, that is, one RB at a physical layer can have up to 156 resource elements (resource element, RE) to carry information bits, and a maximum of 1155 information bits can be carried. However, due to the limitations of the formula (2) and the formula (3), one RB can have up to 144 REs to carry information bits, a maximum of 1066 information bits can be carried, and the bit rate is reduced to only 0.85, resulting in reduction of a network throughput.

To increase a transmission throughput of an air interface, an embodiment of this application provides a communication method. The communication method may be implemented by a terminal device and a network device. Specifically, the terminal device may include the terminal device 101 shown in FIG. 1, and the network device may include the network device 102 shown in FIG. 1.

As shown in FIG. 2, the method provided in this embodiment of this application includes the following steps.

S101. The terminal device determines first capability information.

In a possible example, the first capability information is used to indicate that a transmission rate supported by the terminal device meets a rate condition.

The rate condition includes at least one rate condition of the following three conditions: Condition 1: A transmission rate supported by the terminal device exceeds a first data rate. Condition 2: A transmission rate of single-carrier scheduling supported by the terminal device exceeds a second data rate. Condition 3: A sum of transmission rates of serving cells in all band combinations within a scheduled frequency range supported by the terminal device exceeds a third data rate.

The first capability information indicates that the transmission rate supported by the terminal device exceeds the first data rate, the transmission rate of single-carrier scheduling supported by the terminal device exceeds the second data rate, and the sum of the transmission rates of the serving cells in all the band combinations within the scheduled frequency range supported by the terminal device exceeds the third data rate. Alternatively, the first capability information indicates that the transmission rate of single-carrier scheduling supported by the terminal device exceeds the second data rate and the sum of the transmission rates of the serving cells in all the band combinations within the scheduled frequency range supported by the terminal device exceeds the third data rate. Alternatively, the first capability information indicates that the transmission rate of single-carrier scheduling supported by the terminal device exceeds the second data rate.

Further, the first capability information further indicates that the transmission rate of single-carrier scheduling supported by the terminal device does not exceed the sum of the transmission rates of the serving cells in all the band combinations within the scheduled frequency range and the sum of the transmission rates of the serving cells in all the band combinations within the scheduled frequency range supported by the terminal device does not exceed the transmission rate supported by the terminal device. A single carrier is a carrier of one serving cell within the scheduled frequency range, and all the band combinations within the scheduled frequency range are band combinations supported by the terminal device. That is, the second data rate determined based on a single carrier does not exceed the third data rate determined based on a plurality of carriers including the single carrier, and the third data rate does not exceed the first data rate.

It should be understood that the rate condition includes at least one of the foregoing three conditions, and a peak rate of a single carrier and/or a peak rate of a single carrier in a case of under-full-capability scheduling carrier aggregation can be increased without increasing total terminal costs.

The first data rate includes a peak rate determined according to the formula (1), and the first data rate is determined based on a specified overhead, for example, the specified overhead is 0.14. The second data rate includes a peak transmission rate of single-carrier scheduling determined according to the formula (2), and the second data rate is determined based on the specified overhead, for example, the specified overhead is 0.14. The third data rate includes a sum, determined according to the formula (3), of peak data rates of configured serving cells in all band combinations supported by the terminal device in one band range, and the third data rate is determined based on the specified overhead, for example, the specified overhead is 0.14.

For example, the terminal device can learn, based on information such as factory configurations, a maximum transmission rate supported by the terminal device. When the supported maximum transmission rate exceeds the first data rate, it is determined that the maximum transmission rate meets the rate condition. Similarly, the terminal device can learn, based on the information such as the factory configurations, a maximum transmission rate of single-carrier scheduling supported by the terminal device and/or a sum of maximum transmission rates of the serving cells in all the band combinations within the scheduled frequency range supported by the terminal device.

In addition, the first data rate, the second data rate, and the third data rate may be obtained through calculation by the terminal device based on the foregoing formulas, or may be obtained through calculation by the network device based on the foregoing formulas and notified to the terminal device, or may be obtained by the terminal device based on the information such as the factory configurations.

In another possible example, the first capability information may indicate that an overhead supported by the terminal device is less than a specified overhead.

For example, the specified overhead is 0.14, but the terminal device supports an overhead of 0.07. In this case, the first capability information may indicate the overhead or indicate that the overhead supported by the terminal device is less than 0.14.

For example, the first capability information may indicate that the overhead supported by the terminal device is less than the specified overhead. Further, the first capability information may indicate one or more of the following three overhead conditions: Condition 1: When the terminal device calculates a peak rate according to the formula (1), the overhead supported by the terminal device is less than the specified overhead. Condition 2: When the terminal device calculates a peak transmission rate of single-carrier scheduling according to the formula (2), the overhead supported by the terminal device is less than the specified overhead. Condition 3: When the terminal device calculates, according to the formula (3), a sum of transmission rates of serving cells in all band combinations within a scheduled frequency range supported by the terminal device, the overhead supported by the terminal device is less than the specified overhead.

For example, the first capability information indicates the following: the terminal device uses the specified overhead of 0.14 when determining the peak rate according to the formula (1); when the terminal device calculates the peak transmission rate of single-carrier scheduling according to the formula (2), the overhead supported by the terminal device is less than the specified overhead; and when the terminal device calculates, according to the formula (3), the sum of the transmission rates of the serving cells in all the band combinations within the scheduled frequency range supported by the terminal device, the overhead supported by the terminal device is less than the specified overhead.

It should be understood that the first capability information indicates one or more of the three overhead conditions, and a peak rate of a single carrier and/or a peak rate of a single carrier in a case of under-full-capability scheduling carrier aggregation can be increased without increasing total terminal costs.

For example, the overhead supported by the terminal device may be obtained by the terminal device based on information such as factory configurations. The specified overhead may be learned by the terminal device based on the information such as the factory configurations or may be sent by the network device to the terminal device.

S102. The terminal device sends the first capability information to the network device.

For example, the first capability information may be carried in capability information and sent to the network device.

Correspondingly, the network device receives the first capability information.

By using the method shown in FIG. 2, the terminal device reports capability information to the network device based on a capability of the terminal device, to enable the network device to learn that the terminal device supports a peak data rate higher than a peak data rate determined based on the specified overhead, or to learn that the terminal device supports an overhead lower than the specified overhead, so that when scheduling data of the terminal device, the network device performs scheduling based on the overhead lower than the specified overhead, instead of performing scheduling based on only the specified overhead in a conventional technology, to increase a network throughput.

An example in which a value of the specified overhead is 0.14 is used. A peak rate supported by the terminal device and determined according to the formula (1) based on the overhead of 0.07 supported by the terminal

**Table 3**

| Maximum quantity of MIMO layers | Highest modulation order | Linear scaling factor | Maximum bandwidth | Quantity of carriers | Peak rate |
|---|---|---|---|---|---|
| 4 | 256-QAM | 1 | 100 MHz | 1 | 2.54 |
| 4 | 256-QAM | 1 | 100 MHz | 2 | 5.08 |

It can be learned by comparison with Table 2 that when the terminal device supports a lower overhead value, it indicates that the terminal device can support a higher peak rate, and a data throughput of an air interface is correspondingly increased.

When the terminal device supports a lower overhead value (for example, 0.07) for a single carrier, but still maintains the specified overhead (for example, 0.14) for the peak rate of the terminal, with reference to Table 2 and Table 3, the peak rate of the terminal remains unchanged at 4.7 Gbps in a scenario in which the terminal supports two carriers. Therefore, costs and complexity of the terminal are not increased. However, when only one carrier is scheduled for the terminal, a rate for the single carrier of the terminal may be adjusted to 2.54 Gbps. Compared with a rate of 2.35 Gbps for a single carrier in such a case in the conventional technology, in this application, the data throughput of the air interface is increased by 0.19 Gbps.

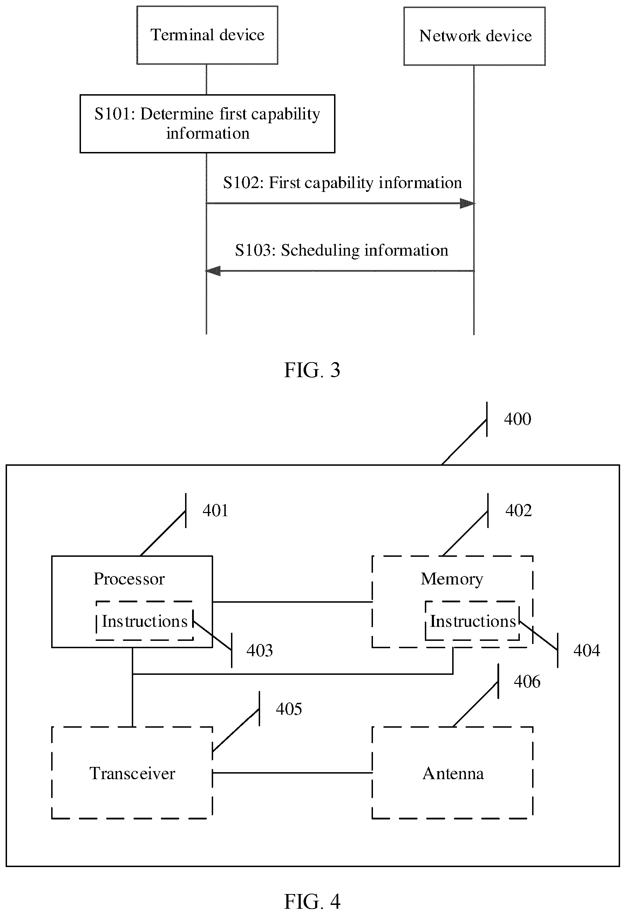

As shown in FIG. 3, after step S102, step S103 may further be performed. S103. The network device sends scheduling information to the terminal device based on the first capability information of the terminal device, where the scheduling information is used to schedule data of the terminal device. A maximum data rate corresponding to the scheduling information exceeds the first data rate; or a transmission rate of single-carrier scheduling corresponding to the scheduling information exceeds the second data rate; or a sum of transmission rates of serving cells in all band combinations within a scheduled frequency range corresponding to the scheduling information exceeds the third data rate. For the first data rate, the second data rate, and the third data rate, refer to the descriptions in S101.

For example, if the transmission rate supported by the terminal device does not meet the rate condition and the overhead supported by the terminal device is not less than the specified overhead, the scheduling information sent by the network device to the terminal needs to meet the formula (2) and the formula (3). If the transmission rate supported by the terminal device meets the rate condition or the overhead supported by the terminal device is less than the specified overhead, an overhead corresponding to the scheduling information sent by the network device to the terminal device may be the overhead supported by the terminal, for example, 0.07, that is, 1/14. In this case, the scheduling information sent by the network device to the terminal needs to meet a rate condition obtained through calculation according to the formula (2) and/or the formula (3) by using 0.07 as the overhead, instead of a rate condition obtained through calculation according to the formula (2) and/or the formula (3) by using 0.14 as an overhead as in the conventional technology.

Correspondingly, the terminal device and the network device can perform data transmission based on the scheduling information, to achieve a higher data throughput.

Downlink (downlink, DL) transmission is used as an example. When an overhead for scheduling by the network device is reduced from 0.14 to 0.07, as shown in Table 4, the throughput can be increased by 190 Mbps in a case of 100 MHz and increased by 380 Mbps in a case of 200 MHz.

**Table 4**

| DL | Peak rate of an air interface in the conventional technology | Peak rate of an air interface in this application | Increase of throughput |
|---|---|---|---|
| 100 MHz, 4*4, 256-QAM | 2.35 Gbps | 2.54 Gbps | 0.19 Gbps |
| 200 MHz, 4*4, 256-QAM | 4.7 Gbps | 5.08 Gbps | 0.38 Gbps |

In a possible implementation of S102, the terminal device can report the first capability information by using indication information of a linear scaling factor. Specifically, when the linear scaling factor indicated by the capability information reported by the terminal device is not less than 1, it indicates that the transmission rate supported by the terminal device meets the rate condition or indicates that the overhead supported by the terminal device is less than the specified overhead. For example, for FR1, when the linear scaling factor is 1.08, it indicates that the transmission rate supported by the terminal device meets the rate condition or indicates that the overhead supported by the terminal device is less than the specified overhead. For FR2, when the linear scaling factor is 1, it indicates that the transmission rate supported by the terminal device meets the rate condition or indicates that the overhead supported by the terminal device is less than the specified overhead.

In another possible implementation of S102, the terminal device can report the first capability information by using a new field in the capability information. For example, when the capability information reported by the terminal device carries a newly defined field, and the newly defined field represents "support", it indicates that the transmission rate supported by the terminal device meets the rate condition or indicates that the overhead supported by the terminal device is less than the specified overhead.

For example, the first capability information may further indicate a frequency range of the first capability information supported by the terminal device.

Specifically, the first capability information may indicate that the terminal device supports the transmission rate (the transmission rate is the transmission rate supported by the terminal device) in a whole band range or indicate that the terminal device supports the overhead (the overhead is the overhead supported by the terminal device) in a whole band range.

For example, the first capability information may further include a field indicating support for the whole band range.

Similarly, the first capability information may indicate that the terminal device supports the transmission rate in one or more frequency ranges supported by the terminal device or indicate that the terminal device supports the overhead in one or more frequency ranges supported by the terminal device; the first capability information may indicate that the terminal device supports the transmission rate in one or more band combinations supported by the terminal device or indicate that the terminal device supports the overhead in one or more band combinations supported by the terminal device; the first capability information may indicate that the terminal device supports the transmission rate in one or more bands supported by the terminal device or indicate that the terminal device supports the overhead in one or more bands supported by the terminal device; the first capability information may indicate that the terminal device supports the transmission rate in one or more bands in one or more band combinations supported by the terminal device or indicate that the terminal device supports the overhead in one or more bands in one or more band combinations supported by the terminal device; and the first capability information may indicate that the terminal device supports the transmission rate in one or more carriers of one or more bands in one or more band combinations supported by the terminal device or indicate that the terminal device supports the overhead in one or more carriers of one or more bands in one or more band combinations supported by the terminal device.

For example, the first capability information may correspond to one band range (or one band combination, or one band, or one carrier). When the terminal device supports a plurality of band ranges (or band combinations, or bands, or carriers), the terminal device can report the first capability information respectively based on the plurality of band ranges (or band combinations, or bands, or carriers). Based on the design, the first capability information in different granularities can be reported based on the frequency ranges, to support a more flexible scheduling manner.

For example, bands supported by the terminal device are band A of FR1, band B of FR1, and band C of FR2. Band A has two component carriers, band B has three component carriers, and band C has four component carriers. All band combinations supported by the terminal device are a combination of band A and band B, and a combination of band A, band B, and band C.

When the first capability information indicates that the terminal device supports the overhead of 0.07 in the whole band range, it indicates that the overhead is 0.07 in all scenarios of the terminal device, that is, the transmission rates are calculated according to the formula (1), the formula (2), and the formula (3) based on the overhead of 0.07.

When the first capability information indicates that the terminal supports the overhead of 0.07 in the one or more frequency ranges supported by the terminal device, for example, may indicate that the overhead of 0.07 is not supported in FR1 but supported in FR2, the network device and the terminal device calculate the transmission rates in FR1 according to the formula (1), the formula (2), and the formula (3) based on the overhead of 0.14, and the network device and the terminal device calculate the transmission rates in FR2 according to the formula (1), the formula (2), and the formula (3) based on the overhead of 0.07.

When the first capability information indicates that the terminal supports the overhead of 0.07 in the one or more band combination supported by the terminal device, for example, supports the overhead of 0.07 in carrier aggregation of band A and band B but not in carrier aggregation of band A, band B, and band C, the network device and the terminal device calculate the transmission rates in the carrier aggregation of band A and band B according to the formula (1), the formula (2), and the formula (3) based on the overhead of 0.07; and during calculation of the transmission rates in the carrier aggregation of band A, band B, and band C according to the formula (1), the formula (2), and the formula (3), the network device and the terminal device calculate the transmission rates in FR1 based on the overhead of 0.14 and calculate the transmission rates in FR2 based on the overhead of 0.08.

When the first capability information indicates that the terminal supports the overhead of 0.07 in the one or more bands in the one or more band combination supported by the terminal device, for example, supports the overhead of 0.07 in band A but not in band B in carrier aggregation of band A and band B, during calculation of the transmission rates in the carrier aggregation of band A and band B according to the formula (1), the formula (2), and the formula (3), the network device and the terminal device calculate the transmission rates corresponding to band A based on the overhead of 0.07 and calculate the transmission rates corresponding to band B based on the overhead of 0.14.

When the first capability information indicates that the terminal supports the overhead of 0.07 in the one or more carriers of the one or more bands in the one or more band combinations supported by the terminal device, for example, supports the overhead of 0.07 in a component carrier 1 of band A but not in a component carrier 1 of band B, during calculation of the transmission rates according to the formula (1), the formula (2), and the formula (3), the network device and the terminal device calculate the transmission rates corresponding to the component carrier 1 of band A based on the overhead of 0.07 and calculate the transmission rates corresponding to the component carrier 1 of band B based on the overhead of 0.14.

In addition, the first capability information may include uplink first capability information and/or downlink first capability information. The uplink first capability information may indicate that an uplink transmission rate supported by the terminal device meets the rate condition or indicate that an uplink overhead supported by the terminal device is less than the specified overhead. The downlink first capability information may indicate that a downlink transmission rate supported by the terminal device meets the rate condition or indicate that a downlink overhead supported by the terminal device is less than the specified overhead.

When the first capability information includes the uplink first capability information, the network device can determine uplink scheduling information based on the uplink first capability information, to increase an uplink data transmission throughput. When the first capability information includes the downlink first capability information, the network device can determine downlink scheduling information based on the downlink first capability information, to increase a downlink data transmission throughput. Based on the design, the first capability information can be reported more flexibly based on the uplink first capability information and the downlink first capability information, to support a more flexible scheduling manner.

Corresponding to the method provided in the foregoing method embodiments, an embodiment of this application further provides a corresponding apparatus, including corresponding modules configured to execute the foregoing embodiments. The module may be software, hardware, or a combination of software and hardware.

FIG. 4 is a schematic diagram of a structure of another communication apparatus according to an embodiment of this application. The communication apparatus may be implemented by a hardware component. The apparatus 400 shown in FIG. 4 may be a communication apparatus, or may be a chip, a chip system, a processor, or the like that supports the first communication apparatus in implementing the foregoing method. Alternatively, the apparatus 400 may be a third communication apparatus, or may be a chip, a chip system, a processor, or the like that supports the third communication apparatus in implementing the foregoing method. The apparatus 400 may be configured to implement the method performed by the terminal device or the network device described in the method embodiment shown in FIG. 2 or FIG. 3. For example, the apparatus 400 includes modules or units or means (means) corresponding to the steps described in the embodiments of this application executed by the terminal device or the network device. The functions or units or means may be implemented by software, or may be implemented by hardware, or may be implemented by hardware executing corresponding software, or may be implemented by a combination of software and hardware. For details, refer to the corresponding descriptions in the foregoing corresponding method embodiment.

A hardware implementation is used as an example. The apparatus 400 may include one or more processors 401. The processor 401 may also be referred to as a processing unit, and can implement a specific control function. The processor 401 may be a general purpose processor, a dedicated processor, or the like. For example, the processor may be a baseband processor or a central processing unit. The baseband processor may be configured to process a communication protocol and communication data. The central processing unit may be configured to control a communication apparatus (for example, a base station, a baseband chip, a terminal, a terminal chip, a distributed unit (distributed unit, DU), or a central unit (central unit, CU)), execute a software program, and process data of the software program.

In an optional design, the processor 401 may store instructions 403 and/or data, and the instructions 403 and/or data may be run by the processor, so that the apparatus 400 performs the method described in the foregoing method embodiments.

In another optional design, the processor 401 may include a transceiver unit configured to implement receiving and sending functions. For example, the transceiver unit may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code or data. Alternatively, the transceiver circuit, the interface, or the interface circuit may be configured to transmit or transfer a signal.

In still another possible design, the apparatus 400 may include a circuit, and the circuit can implement a function of sending, receiving, or communication in the foregoing method embodiments.

Optionally, the apparatus 400 may include one or more memories 402. The memory 402 may store instructions 404, and the instructions may be run on the processor, so that the apparatus 400 performs the method described in the foregoing method embodiments. Optionally, the memory may further store data. Optionally, the processor may also store instructions and/or data. The processor and the memory may be separately disposed, or may be integrated together. For example, a correspondence described in the foregoing method embodiments may be stored in the memory or stored in the processor.

Optionally, the apparatus 400 may further include a transceiver 405 and/or an antenna 406. The processor 401 may be referred to as a processing unit, and controls the apparatus 400. The transceiver 405 may be referred to as a transceiver unit, a transceiver, a transceiver circuit, a transceiver apparatus, a transceiver module, or the like, and is configured to implement sending and receiving functions.

The apparatus 400 in this embodiment of this application is configured to perform the method described in the foregoing embodiments of this application.

During execution of the functions implemented by the terminal device in the foregoing method embodiments, the processor 401 is configured to determine first capability information, where the first capability information indicates that a transmission rate supported by the communication apparatus meets a rate condition or indicates that an overhead supported by the communication apparatus is less than a specified overhead. The transceiver 405 is further configured to send the first capability information to a network device.

The rate condition includes one or more of the following conditions: The transmission rate supported by the terminal device exceeds a first data rate, where the first data rate is related to the specified overhead; or a transmission rate of single-carrier scheduling supported by the terminal device exceeds a second data rate, where the second data rate is related to the specified overhead; or a sum of transmission rates of serving cells in all band combinations within a scheduled frequency range supported by the terminal device exceeds a third data rate, where the third data rate is related to the specified overhead.

In a possible design, the transceiver 405 further receives scheduling information from the network device. A maximum data rate corresponding to the scheduling information exceeds the first data rate; or a transmission rate of single-carrier scheduling corresponding to the scheduling information exceeds the second data rate; or a sum of transmission rates of serving cells in all band combinations within a scheduled frequency range corresponding to the scheduling information exceeds the third data rate, where the third data rate is related to the specified overhead.

In a possible design, the first capability information indicates that the terminal device supports the transmission rate in a whole band range; or the first information indicates that the terminal device supports the transmission rate in one or more frequency ranges supported by the terminal device; or the first information indicates that the terminal device supports the transmission rate in one or more band combinations supported by the terminal device; or the first information indicates that the terminal device supports the transmission rate in one or more bands supported by the terminal device;

or the first information indicates that the terminal device supports the transmission rate on one or more carriers supported by the terminal device.

In a possible design, the first capability information includes uplink first capability information and/or downlink first capability information. The uplink first capability information indicates that an uplink transmission rate supported by the terminal device meets the rate condition or indicates that an uplink overhead supported by the terminal device is less than the specified overhead. The uplink first capability information indicates that a downlink transmission rate supported by the terminal device meets the rate condition or indicates that a downlink overhead supported by the terminal device is less than the specified overhead.

During implementation of the functions implemented by the network device in the foregoing method embodiments, the transceiver 405 is configured to receive first capability information from a terminal device, where the first capability information indicates whether a transmission rate supported by the terminal device meets a rate condition or indicate that an overhead supported by the terminal device is less than a specified overhead.

The rate condition includes one or more of the following conditions: The transmission rate supported by the terminal device exceeds a first data rate, where the first data rate is related to the specified overhead; or a transmission rate of single-carrier scheduling supported by the terminal device exceeds a second data rate, where the second data rate is related to the specified overhead; or a sum of transmission rates of serving cells in all band combinations within a scheduled frequency range supported by the terminal device exceeds a third data rate, where the third data rate is related to the specified overhead.

In a possible design, the transceiver 405 is further configured to send scheduling information to the terminal device. A maximum data rate corresponding to the scheduling information exceeds the first data rate; or a transmission rate of single-carrier scheduling corresponding to the scheduling information exceeds the second data rate; or a sum of transmission rates of serving cells in all band combinations within a scheduled frequency range corresponding to the scheduling information exceeds the third data rate, where the third data rate is related to the specified overhead. It should be understood that the processor may generate the scheduling information based on the first capability information, or the processor may generate the scheduling information in response to the first capability information.

In a possible design, the first capability information indicates that the terminal device supports the transmission rate in a whole band range; or the first information indicates that the terminal device supports the transmission rate in one or more frequency ranges supported by the terminal device; or the first information indicates that the terminal device supports the transmission rate in one or more band combinations supported by the terminal device; or the first information indicates that the terminal device supports the transmission rate in one or more bands supported by the terminal device; or the first information indicates that the terminal device supports the transmission rate on one or more carriers supported by the terminal device.

In a possible design, the first capability information includes uplink first capability information and/or downlink first capability information. The uplink first capability information indicates that an uplink transmission rate supported by the terminal device meets the rate condition or indicates that an uplink overhead supported by the terminal device is less than the specified overhead. The uplink first capability information indicates that a downlink transmission rate supported by the terminal device meets the rate condition or indicates that a downlink overhead supported by the terminal device is less than the specified overhead.

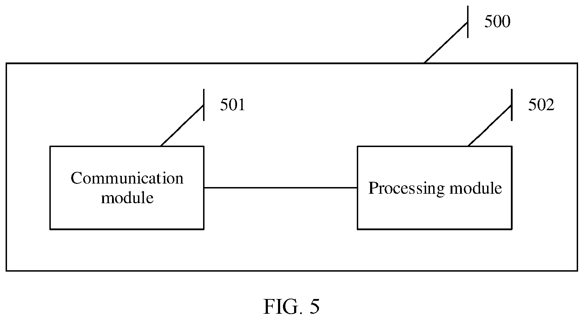

As shown in FIG. 5, a communication apparatus implemented by using a modular structure provided in an embodiment of this application may include a communication module 501 and a processing module 502. The communication module 501 and the processing module 502 are coupled to each other. The communication apparatus 500 may be configured to perform the steps performed by the terminal device or the network device shown in FIG. 2 or FIG. 3. The communication module 501 may be configured to support the communication apparatus 500 in performing communication. The communication module 501 may also be referred to as a communication unit, a communication interface, a transceiver module, or a transceiver unit. The communication module 501 may have a wireless communication function, for example, can communicate with another communication apparatus in a wireless communication manner. The processing module 502 may also be referred to as a processing unit and may be configured to support the communication apparatus 500 in performing the processing actions performed by the terminal device or the network device in the foregoing method embodiments, including but not limited to, generating information and a message that are to be sent by the communication module 501, and/or performing demodulation, decoding, and the like on a signal received by the communication module 501.

For example, during implementation of the functions implemented by the terminal device in the foregoing method embodiments, the processing module 502 may be configured to determine first capability information, where the first capability information indicates that a transmission rate supported by the communication apparatus meets a rate condition or indicates that an overhead supported by the communication apparatus is less than a specified overhead. The communication module 501 may further be configured to send the first capability information to a network device.

The rate condition includes one or more of the following conditions: The transmission rate supported by the terminal device exceeds a first data rate, where the first data rate is related to the specified overhead; or a transmission rate of single-carrier scheduling supported by the terminal device exceeds a second data rate, where the second data rate is related to the specified overhead; or a sum of transmission rates of serving cells in all band combinations within a scheduled frequency range supported by the terminal device exceeds a third data rate, where the third data rate is related to the specified overhead.

In a possible design, the communication module 501 may further receive scheduling information from the network device. A maximum data rate corresponding to the scheduling information exceeds the first data rate; or a transmission rate of single-carrier scheduling corresponding to the scheduling information exceeds the second data rate; or a sum of transmission rates of serving cells in all band combinations within a scheduled frequency range corresponding to the scheduling information exceeds the third data rate, where the third data rate is related to the specified overhead.

In a possible design, the first capability information indicates that the terminal device supports the transmission rate in a whole band range; or the first information indicates that the terminal device supports the transmission rate in one or more frequency ranges supported by the terminal device; or the first information indicates that the terminal device supports the transmission rate in one or more band combinations supported by the terminal device; or the first information indicates that the terminal device supports the transmission rate in one or more bands supported by the terminal device; or the first information indicates that the terminal device supports the transmission rate on one or more carriers supported by the terminal device.

In a possible design, the first capability information includes uplink first capability information and/or downlink first capability information. The uplink first capability information indicates that an uplink transmission rate supported by the terminal device meets the rate condition or indicates that an uplink overhead supported by the terminal device is less than the specified overhead. The uplink first capability information indicates that a downlink transmission rate supported by the terminal device meets the rate condition or indicates that a downlink overhead supported by the terminal device is less than the specified overhead.

During implementation of the functions implemented by the network device in the foregoing method embodiments, the communication module 501 may be configured to receive first capability information from a terminal device, where the first capability information may indicate whether a transmission rate supported by the terminal device meets a rate condition or indicate that an overhead supported by the terminal device is less than a specified overhead.

The rate condition includes one or more of the following conditions: The transmission rate supported by the terminal device exceeds a first data rate, where the first data rate is related to the specified overhead; or a transmission rate of single-carrier scheduling supported by the terminal device exceeds a second data rate, where the second data rate is related to the specified overhead; or a sum of transmission rates of serving cells in all band combinations within a scheduled frequency range supported by the terminal device exceeds a third data rate, where the third data rate is related to the specified overhead.

In a possible design, the communication module 501 may further be configured to send scheduling information to the terminal device. A maximum data rate corresponding to the scheduling information exceeds the first data rate; or a transmission rate of single-carrier scheduling corresponding to the scheduling information exceeds the second data rate; or a sum of transmission rates of serving cells in all band combinations within a scheduled frequency range corresponding to the scheduling information exceeds the third data rate, where the third data rate is related to the specified overhead. It should be understood that the processing module may generate the scheduling information based on the first capability information, or the processor may generate the scheduling information in response to the first capability information.

In a possible design, the first capability information indicates that the terminal device supports the transmission rate in a whole band range; or the first information indicates that the terminal device supports the transmission rate in one or more frequency ranges supported by the terminal device; or the first information indicates that the terminal device supports the transmission rate in one or more band combinations supported by the terminal device; or the first information indicates that the terminal device supports the transmission rate in one or more bands supported by the terminal device; or the first information indicates that the terminal device supports the transmission rate on one or more carriers supported by the terminal device.

In a possible design, the first capability information includes uplink first capability information and/or downlink first capability information. The uplink first capability information indicates that an uplink transmission rate supported by the terminal device meets the rate condition or indicates that an uplink overhead supported by the terminal device is less than the specified overhead. The uplink first capability information indicates that a downlink transmission rate supported by the terminal device meets the rate condition or indicates that a downlink overhead supported by the terminal device is less than the specified overhead.

The processor and the transceiver described in this application may be implemented in an integrated circuit (integrated circuit, IC), an analog IC, a radio frequency integrated circuit RFIC, a mixed-signal IC, an application specific integrated circuit (application specific integrated circuit, ASIC), a printed circuit board (printed circuit board, PCB), an electronic device, and the like. The processor and transceiver may alternatively be manufactured by using various IC process technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), or gallium arsenide (GaAs).

The apparatus described in the foregoing embodiments may be a terminal device or a network device. However, a scope of the apparatus described in this application is not limited thereto, and a structure of the apparatus may not be limited by FIG. 4 and FIG. 5. The apparatus may be an independent device or may be a part of a large device. For example, the apparatus may be:

(1) an independent integrated circuit IC, a chip, or a chip system or subsystem;
(2) a set of one or more ICs, where optionally, the IC set may also include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machinery device, a household device, a medical device, an industrial device, and the like; and
(6) others.

It should be understood that the components included in the communication apparatus in the foregoing embodiments are examples, and are merely possible examples, and may have another composition manner during actual implementation. In addition, the components in the foregoing communication apparatus may be integrated into one module, or may exist independently physically. The integrated module may be implemented in a form of hardware, or may be implemented in a form of a software functional module, and should not be understood as a limitation on the structure shown in the foregoing accompanying drawings.

Based on a concept the same as that of the foregoing method embodiments, an embodiment of this application further provides a computer-readable storage medium, storing a computer program. When the program is executed by a processor, a computer is enabled to perform the operations performed by the network device or the terminal device in the foregoing method embodiments or any one of the possible implementations of the method embodiments.

Based on a concept the same as that of the foregoing method embodiments, this application further provides a computer program product. When the computer program product is invoked and executed by a computer, the computer may be enabled to perform the operations performed by the network device or the terminal device in the foregoing method embodiments or any one of the possible implementations of the method embodiments.

Based on a concept the same as that of the foregoing method embodiments, this application further provides a chip or a chip system. The chip may include a processor. The chip may further include a memory (or a storage module) and/or a transceiver (or a communication module), or the chip is coupled to a memory (or a storage module) and/or a transceiver (or a communication module). The transceiver (or the communication module) may be configured to support the chip in performing wired and/or wireless communication, the memory (or the storage module) may be configured to store a program, and the processor invokes the program to implement the operations performed by the network device or the terminal device in the foregoing method embodiments and any one of the possible implementations of the method embodiments. The chip system includes the chip or may include the chip and another discrete component, for example, a memory (or a memory module) and/or a transceiver (or a communication module).

It should be understood that the memory in this application may be configured to store at least a computer program or instructions, and/or store information and data in the embodiments of this application. The computer program may be invoked by a processor (or a processing unit or a processing module), to perform the method in the embodiments of this application. The memory may be a flash (flash) memory, a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer. However, the memory is not limited thereto. The memory may exist independently, and is connected to the processor by using the communication bus. Alternatively, the memory may be integrated with the processor.

Based on a concept the same as that of the foregoing method embodiments, this application further provides a communication system. The communication system may be configured to implement the operations performed by the communication apparatus or the third communication apparatus in the foregoing method embodiments and any one of the possible implementations of the foregoing method embodiments. For example, the communication system has the architecture shown in FIG. 1.

The embodiments of this application are described with reference to the flowcharts and/or block diagrams of the method, the apparatus, and the computer program product. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

**Claims**

1. A communication method applied to a terminal device, comprising:

   determining (S101) first capability information, wherein the first capability information indicates that a transmission rate supported by the terminal device meets a rate condition; and
   sending (S102) the first capability information to a network device, wherein
   the rate condition comprises:

   a sum of transmission rates of serving cells in all band combinations within a scheduled frequency range supported by the terminal device exceeds a third data rate, wherein the third data rate is determined based on a 3GPP specified overhead, wherein a date rate is specified in 3GPP 38.306 according to the formula

$$\textbf{\textit{data rate (in Mbps)}} = 10^{-6} \cdot \sum_{j=1}^{J} \left( v_{Layers}^{(j)} \cdot Q_m^{(j)} \cdot f^{(j)} \cdot R_{\max} \cdot \frac{N_{PRB}^{BW(j),\mu} \cdot 12}{T_s^{\mu}} \cdot \left(1 - OH^{(j)}\right) \right)$$

   where J is a quantity of component carriers in a band (band) or a band combination, j represents each band or each band combination, and $j$=1, 2, ..., or $J$, $R_{\max}$=948/1024, $v_{Layers}^{(j)}$ represents a maximum number of supported layers of a component carrier j configured by a higher layer, $f^{(j)}$ is a linear scaling factor of the component carrier j configured by the higher layer, which is 1, 0.8, 0.75, or 0.4, $\mu$ is a value corresponding to a subcarrier spacing, the value of $\mu$ may be 0, 1, 2, or 3, which respectively corresponds to a 15 kHz subcarrier spacing, a 30 kHz subcarrier spacing, a 60 kHz subcarrier spacing, and a 120 kHz subcarrier spacing, $T_s^{\mu}$ is an average length of orthogonal frequency-division multiplexing symbols in one subframe corresponding to $\mu$, where $T_s^{\mu} = \dfrac{10^{-3}}{14 \cdot 2^{\mu}}$. $OH^{(j)}$ is an overhead of the component carrier j, $N_{PRB}^{BW(j),\mu}$ is a maximum quantity of resource blocks in a signal bandwidth $BW^{(j)}$ of the component carrier j corresponding to $\mu$, and $OH^{(j)}$ =0.14 is the specified overhead;
   wherein the method further comprises:
   receiving scheduling information from the network device, wherein a sum of transmission rates of serving cells in all band combinations within a scheduled frequency range corresponding to the scheduling information exceeds the third data rate.

2. The method according to claim 1, wherein
   the rate condition comprises one or more of the following conditions:

   the transmission rate supported by the terminal device exceeds a first data rate, wherein the first data rate is related to the specified overhead; or
   a transmission rate of single-carrier scheduling supported by the terminal device exceeds a second data rate, wherein the second data rate is related to the specified overhead

3. The method according to claim 1 or 2, wherein the first capability information indicates that the terminal device supports the transmission rate in a whole band range; or

   the first capability information indicates that the terminal device supports the transmission rate in one or more frequency ranges supported by the terminal device; or
   the first capability information indicates that the terminal device supports the transmission rate in one or more band combinations supported by the terminal device; or
   the first capability information indicates that the terminal device supports the transmission rate in one or more bands supported by the terminal device; or
   the first capability information indicates that the terminal device supports the transmission rate on one or more carriers supported by the terminal device.

4. The method according to any one of claims 1 to 3, wherein the first capability information comprises uplink first capability information and/or downlink first capability information;

   the uplink first capability information indicates that an uplink transmission rate supported by the terminal device meets the rate condition or indicates that an uplink overhead supported by the terminal device is less than the specified overhead; and
   the downlink first capability information indicates that a downlink transmission rate supported by the terminal device meets the rate condition or indicates that a downlink overhead supported by the terminal device is less than the specified overhead.

5. A communication method applied to a network device, comprising:

   receiving first capability information from a terminal device, wherein the first capability information indicates that a transmission rate supported by the terminal device meets a rate condition, wherein
   the rate condition comprises:

   a sum of transmission rates of serving cells in all band combinations within a scheduled frequency range supported by the terminal device exceeds a third data rate, wherein the third data rate is determined based on a 3GPP specified overhead, wherein a date rate is specified in 3GPP 38.306 according to the formula

$$\textbf{\textit{data rate (in Mbps)}} = 10^{-6} \cdot \sum_{j=1}^{J} \left( v_{Layers}^{(j)} \cdot Q_m^{(j)} \cdot f^{(j)} \cdot R_{\max} \cdot \frac{N_{PRB}^{BW(j),\mu} \cdot 12}{T_s^{\mu}} \cdot \left( 1 - OH^{(j)} \right) \right)$$

where J is a quantity of component carriers in a band (band) or a band combination, j represents each band or each band combination, and $j$=1, 2, ..., or $J$, $R_{\max}$=948/1024, $v_{Layers}^{(j)}$ represents a maximum number of supported layers of a component carrier j configured by a higher layer, $f^{(j)}$ is a linear scaling factor of the component carrier j configured by the higher layer, which is 1, 0.8, 0.75, or 0.4, $\mu$ is a value corresponding to a subcarrier spacing, the value of $\mu$ may be 0, 1, 2, or 3, which respectively corresponds to a 15 kHz subcarrier spacing, a 30 kHz subcarrier spacing, a 60 kHz subcarrier spacing, and a 120 kHz subcarrier spacing, $T_s^{\mu}$ is an average length of orthogonal frequency-division multiplexing symbols in one subframe

corresponding to $\mu$, where $T_s^{\mu} = \dfrac{10^{-3}}{14 \cdot 2^{\mu}}$. $OH^{(j)}$ is an overhead of the component carrier j, $N_{PRB}^{BW(j),\mu}$ is a maximum quantity of resource blocks in a signal bandwidth $BW^{(j)}$ of the component carrier j corresponding to $\mu$, and $OH^{(j)} = 0.14$ is the specified overhead;

the method further comprises:
sending scheduling information to the terminal device based on the first capability information, wherein a sum of transmission rates of serving cells in all band combinations within a scheduled frequency range corresponding to the scheduling information exceeds the third data rate.

6. The method according to claim 5,
wherein
the rate condition comprises one or more of the following conditions:

the transmission rate supported by the terminal device exceeds a first data rate, wherein the first data rate is related to the specified overhead; or
a transmission rate of single-carrier scheduling supported by the terminal device exceeds a second data rate, wherein the second data rate is related to the specified overhead.

7. The method according to claim 5 or 6, wherein the first capability information indicates that the terminal device supports the transmission rate in a whole band range; or

the first capability information indicates that the terminal device supports the transmission rate in one or more frequency ranges supported by the terminal device; or
the first capability information indicates that the terminal device supports the transmission rate in one or more band combinations supported by the terminal device; or
the first capability information indicates that the terminal device supports the transmission rate in one or more bands supported by the terminal device; or
the first capability information indicates that the terminal device supports the transmission rate on one or more carriers supported by the terminal device.

8. The method according to any one of claims 5 to 7, wherein the first capability information comprises uplink first capability information and/or downlink first capability information;

the uplink first capability information indicates that an uplink transmission rate supported by the terminal device meets the rate condition or indicates that an uplink overhead supported by the terminal device is less than the specified overhead; and
the downlink first capability information indicates that a downlink transmission rate supported by the terminal device meets the rate condition or indicates that a downlink overhead supported by the terminal device is less than the specified overhead.

9. A communication apparatus, configured to perform the method according to any one of claims 1 to 8.

10. A computer program product comprising instructions which, when executed by a computer, cause the computer to carry out the method of any one of claims 1 to 8.

11. A chip, wherein the chip is connected to a memory or the chip comprises the memory, and is configured to read and execute instructions stored in the memory, to implement the method according to any one of claims 1 to 8.

12. A computer-readable storage medium, comprising instructions, wherein when the instructions is run on a computer, the computer is enabled to perform the method according to any one of claims 1 to 8.

**Patentansprüche**

1. Kommunikationsverfahren, das auf ein Endgerät angewendet wird, umfassend:

Bestimmen (S101) erster Fähigkeitsinformationen, wobei die ersten Fähigkeitsinformationen anzeigen, dass eine Übertragungsrate, die von dem Endgerät unterstützt wird, eine Ratenbedingung erfüllt; und
Senden (S102) der ersten Fähigkeitsinformationen an ein Netzwerkgerät, wobei
die Ratenbedingung Folgendes umfasst:

eine Summe von Übertragungsraten von bedienenden Zellen in allen Bandkombinationen innerhalb eines geplanten Frequenzbereichs, der von dem Endgerät unterstützt wird, überschreitet eine dritte Datenrate, wobei die dritte Datenrate basierend auf einem 3GPP-festgelegten Overhead bestimmt wird,
wobei eine Datenrate in 3GPP 38.306 gemäß der folgenden Formel festgelegt ist

$$\text{Datenrate (in Mbit/s)} = 10^{-6} \cdot \sum_{j=1}^{J} \left( v_{Layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot \left(1 - OH^{(j)}\right) \right)$$

wobei J eine Anzahl von Komponententrägern in einem Band (Band) oder einer Bandkombination ist, $j$ jedes Band oder jede Bandkombination darstellt und $j$=1, 2, ..., oder $J$, $R_{max}$=948/1024, $v_{Layers}^{(j)}$ eine maximale Anzahl unterstützter Schichten eines Komponententrägers j darstellt, der von einer höheren Schicht konfiguriert wird, $\square^{(\square)}$ ein linearer Skalierungsfaktor des Komponententrägers j ist, der von der höheren Schicht konfiguriert wird, der oder ist, $\mu$ ein Wert ist, der einem Unterträgerabstand entspricht, der Wert von $\mu$ oder sein kann, was jeweils einem Unterträgerabstand von 15 kHz, einem Unterträgerabstand von 30 kHz, einem Unterträgerabstand von 60 kHz und einem Unterträgerabstand von 120 kHz entspricht,

$$T_s^{\mu}$$

eine durchschnittliche Länge von orthogonalen Frequenzmultiplexingsymbolen in einem Unterrahmen ist,

die $\mu$ entspricht, wobei $$T_s^{\mu} = \frac{10^{-3}}{14 \cdot 2^{\mu}}$$ ist. $OH^{(j)}$ ist ein Overhead des Komponententrägers j,

$$N_{PRB}^{BW(j),\mu}$$

ist eine maximale Anzahl von Ressourcenblöcken in einer Signalbandbreite $\square^{(\square)}$ des Komponententrägers j, die $\mu$ entspricht, und $\square^{(\square)}$=0,14 ist der festgelegte Overhead;
wobei das Verfahren ferner Folgendes umfasst:
Empfangen von Planungsinformationen von dem Netzwerkgerät, wobei eine Summe von Übertragungsraten von bedienenden Zellen in allen Bandkombinationen innerhalb eines geplanten Frequenzbereichs, der den Planungsinformationen entspricht, die dritte Datenrate überschreitet.

**2.** Verfahren nach Anspruch 1, wobei
die Ratenbedingung eine oder mehrere der folgenden Bedingungen umfasst:

die Übertragungsrate, die von dem Endgerät unterstützt wird, überschreitet eine erste Datenrate, wobei die erste Datenrate mit dem festgelegten Overhead zusammenhängt; oder
eine Übertragungsrate von Einzelträgerplanung, die von dem Endgerät unterstützt wird, überschreitet eine zweite Datenrate, wobei die zweite Datenrate mit dem festgelegten Overhead zusammenhängt.

**3.** Verfahren nach Anspruch 1 oder 2, wobei die ersten Fähigkeitsinformationen anzeigen, dass das Endgerät die Übertragungsrate in einem gesamten Bandbereich unterstützt;

oder

die ersten Fähigkeitsinformationen anzeigen, dass das Endgerät die Übertragungsrate in einem oder mehreren Frequenzbereichen, die von dem Endgerät unterstützt werden, unterstützt; oder
die ersten Fähigkeitsinformationen anzeigen, dass das Endgerät die Übertragungsrate in einem oder mehreren Bandkombinationen, die von dem Endgerät unterstützt werden, unterstützt; oder
die ersten Fähigkeitsinformationen anzeigen, dass das Endgerät die Übertragungsrate in einem oder mehreren Bändern, die von dem Endgerät unterstützt werden, unterstützt; oder
die ersten Fähigkeitsinformationen anzeigen, dass das Endgerät die Übertragungsrate auf einem oder mehreren Trägern, die von dem Endgerät unterstützt werden, unterstützt.

4. Verfahren nach einem der Ansprüche 1 bis 3, wobei die ersten Fähigkeitsinformationen erste Uplink-Fähigkeitsinformationen und/oder erste Downlink-Fähigkeitsinformationen umfassen;

die ersten Uplink-Fähigkeitsinformationen anzeigen, dass eine Uplink-Übertragungsrate, die von dem Endgerät unterstützt wird, die Ratenbedingung erfüllt, oder anzeigen, dass ein Uplink-Overhead, der von dem Endgerät unterstützt wird, kleiner als der festgelegte Overhead ist; und
die ersten Downlink-Fähigkeitsinformationen anzeigen, dass eine Downlink-Übertragungsrate, die von dem Endgerät unterstützt wird, die Ratenbedingung erfüllt, oder anzeigen, dass ein Downlink-Overhead, der von dem Endgerät unterstützt wird, kleiner als der festgelegte Overhead ist.

5. Kommunikationsverfahren, das auf ein Netzwerkgerät angewendet wird, umfassend:

Empfangen erster Fähigkeitsinformationen von einem Endgerät, wobei die ersten Fähigkeitsinformationen anzeigen, dass eine Übertragungsrate, die von dem Endgerät unterstützt wird, eine Ratenbedingung erfüllt, wobei die Ratenbedingung Folgendes umfasst:

eine Summe von Übertragungsraten von bedienenden Zellen in allen Bandkombinationen innerhalb eines geplanten Frequenzbereichs, der von dem Endgerät unterstützt wird, überschreitet eine dritte Datenrate, wobei die dritte Datenrate basierend auf einem 3GPP-festgelegten Overhead bestimmt wird,
wobei eine Datenrate in 3GPP 38.306 gemäß der folgenden Formel festgelegt ist

$$\text{Datenrate (in Mbit/s)} = 10^{-6} \cdot \sum_{j=1}^{J}\left( v_{Layers}^{(j)} \cdot Q_m^{(j)} \cdot f^{(j)} \cdot R_{\max} \cdot \frac{N_{PRB}^{BW(j),\mu} \cdot 12}{T_s^{\mu}} \cdot \left(1 - OH^{(j)}\right)\right)$$

wobei J eine Anzahl von Komponententrägern in einem Band (Band) oder einer Bandkombination ist, j jedes Band oder jede Bandkombination darstellt und j=1, 2, ..., oder *J*, $R_{\max}$=948/1024, $v_{Layers}^{(j)}$

eine maximale Anzahl unterstützter Schichten eines Komponententrägers j darstellt, der von einer höheren Schicht konfiguriert wird, $\square^{(\square)}$ ein linearer Skalierungsfaktor des Komponententrägers j ist, der von der höheren Schicht konfiguriert wird, der oder ist, $\mu$ ein Wert ist, der einem Unterträgerabstand entspricht, der Wert von $\mu$ oder sein kann, was jeweils einem Unterträgerabstand von 15 kHz, einem Unterträgerabstand von 30 kHz, einem Unterträgerabstand von 60 kHz und einem Unterträgerabstand von 120 kHz entspricht,

$$T_s^{\mu}$$

eine durchschnittliche Länge von orthogonalen Frequenzmultiplexingsymbolen in einem Unterrahmen ist,

$$T_s^{\mu} = \frac{10^{-3}}{14 \cdot 2^{\mu}}$$

die $\mu$ entspricht, wobei . $OH^{(j)}$ ist ein Overhead des Komponententrägers j,

$$N\,_{PRB}^{\,BW\,(j),\mu}$$

ist eine maximale Anzahl von Ressourcenblöcken in einer Signalbandbreite $BW^{(j)}$ des Komponententrägers j, die ⊐ entspricht, und ⊐⊐$^{(\square)}$=0,14 ist der festgelegte Overhead;
das Verfahren ferner Folgendes umfasst:
Senden von Planungsinformationen an das Endgerät basierend auf den ersten Fähigkeitsinformationen, wobei eine Summe von Übertragungsraten von bedienenden Zellen in allen Bandkombinationen innerhalb eines geplanten Frequenzbereichs, die den Planungsinformationen entspricht, die dritte Datenrate überschreitet.

6. Verfahren nach Anspruch 5,
wobei
die Ratenbedingung eine oder mehrere der folgenden Bedingungen umfasst:

die Übertragungsrate, die von dem Endgerät unterstützt wird, überschreitet eine erste Datenrate, wobei die erste Datenrate mit dem festgelegten Overhead zusammenhängt; oder
eine Übertragungsrate von Einzelträgerplanung, die von dem Endgerät unterstützt wird, eine zweite Datenrate überschreitet, wobei die zweite Datenrate mit dem festgelegten Overhead zusammenhängt.

7. Verfahren nach Anspruch 5 oder 6, wobei die ersten Fähigkeitsinformationen anzeigen, dass das Endgerät die Übertragungsrate in einem gesamten Bandbereich unterstützt;
oder

die ersten Fähigkeitsinformationen anzeigen, dass das Endgerät die Übertragungsrate in einem oder mehreren Frequenzbereichen, die von dem Endgerät unterstützt werden, unterstützt; oder
die ersten Fähigkeitsinformationen anzeigen, dass das Endgerät die Übertragungsrate in einem oder mehreren Bandkombinationen, die von dem Endgerät unterstützt werden, unterstützt; oder
die ersten Fähigkeitsinformationen anzeigen, dass das Endgerät die Übertragungsrate in einem oder mehreren Bändern, die von dem Endgerät unterstützt werden, unterstützt; oder
die ersten Fähigkeitsinformationen anzeigen, dass das Endgerät die Übertragungsrate auf einem oder mehreren Trägern, die von dem Endgerät unterstützt werden, unterstützt.

8. Verfahren nach einem der Ansprüche 5 bis 7, wobei die ersten Fähigkeitsinformationen erste Uplink-Fähigkeitsinformationen und/oder erste Downlink-Fähigkeitsinformationen umfassen;

die ersten Uplink-Fähigkeitsinformationen anzeigen, dass eine Uplink-Übertragungsrate, die von dem Endgerät unterstützt wird, die Ratenbedingung erfüllt, oder anzeigen, dass ein Uplink-Overhead, der von dem Endgerät unterstützt wird, kleiner als der festgelegte Overhead ist; und
die ersten Downlink-Fähigkeitsinformationen anzeigen, dass eine Downlink-Übertragungsrate, die von dem Endgerät unterstützt wird, die Ratenbedingung erfüllt, oder anzeigen, dass ein Downlink-Overhead, der von dem Endgerät unterstützt wird, kleiner als der festgelegte Overhead ist.

9. Kommunikationsvorrichtung, die dazu konfiguriert ist, das Verfahren nach einem der Ansprüche 1 bis 8 durchzuführen.

10. Computerprogrammprodukt, umfassend Anweisungen, die, wenn sie von einem Computer ausgeführt werden, den Computer dazu veranlassen, das Verfahren nach einem der Ansprüche 1 bis 8 umzusetzen.

11. Chip, wobei der Chip mit einem Speicher verbunden ist oder der Chip den Speicher umfasst und dazu konfiguriert ist, Anweisungen, die in dem Speicher gespeichert sind, zu lesen und auszuführen, um das Verfahren nach einem der Ansprüche 1 bis 8 zu implementieren.

12. Computerlesbares Speichermedium, umfassend Anweisungen, wobei, wenn die Anweisungen auf einem Computer laufen, der Computer in die Lage versetzt wird, das Verfahren nach einem der Ansprüche 1 bis 8 durchzuführen.

**Revendications**

1. Procédé de communication appliqué à un dispositif terminal, comprenant :

la détermination (S101) de premières informations de capacité, dans lequel les premières informations de capacité indiquent qu'un débit de transmission pris en charge par le dispositif terminal satisfait une condition de débit ; et
l'envoi (S102) des premières informations de capacité à un dispositif réseau, dans lequel
la condition de débit comprend :

une somme de débits de transmission de cellules de desserte dans toutes les combinaisons de bandes dans une plage de fréquences planifiée prise en charge par le dispositif terminal dépasse un troisième débit de données, dans lequel le troisième débit de données est déterminé sur la base d'un surdébit spécifié 3GPP, dans lequel un débit de données est spécifié dans 3GPP 38.306 selon la formule

$$débit\ de\ données\ (en\ Mbps) =$$

$$10^{-6} \cdot \sum_{j=1}^{J} \left( v_{Layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot \left(1 - OH^{(j)}\right) \right)$$

où J est une quantité de porteuses composantes dans une bande (bande) ou une combinaison de bandes, j représente chaque bande ou chaque combinaison de bandes, et j=1, 2, ..., ou J, $R_{max}$=948/1024,

$$v_{Layers}^{(j)}$$

représente un nombre maximum de couches prises en charge d'une porteuse composante j configurée par une couche supérieure, $\sqsupset^{(\square)}$ est un facteur d'échelle linéaire de la porteuse composante j configurée par la couche supérieure, qui est 1, 0,8, 0,75 ou 0,4, $\mu$ est une valeur correspondant à un espacement de sous-porteuses, la valeur de $\mu$ peut être 0, 1, 2 ou 3, qui correspond respectivement à un espacement de sous-porteuses de 15 kHz, un espacement de sous-porteuses de 30 kHz, un espacement de sous-porteuses de 60 kHz et un espacement de sous-porteuses de 120 kHz,

$$T_s^{\mu}$$

est une longueur moyenne de symboles de multiplexage orthogonal par répartition en fréquence dans une sous-trame correspondant à $\mu$, où $T_s^{\mu} = \frac{10^{-3}}{14 \cdot 2^{\mu}}$ . $OH^{(j)}$ est un surdébit de la porteuse composante j,

$$N_{PRB}^{BW(j),\mu}$$

est une quantité maximale de blocs de ressources dans une bande passante de signal $\sqsupset\!\sqsupset^{(\square)}$ de la porteuse composante j correspondant à $\mu$, et $\sqsupset\!\sqsupset^{(\square)}$= 0,14 est le surdébit spécifié ;
dans lequel le procédé comprend également :
la réception d'informations de planification en provenance du dispositif réseau, dans lequel la somme de débits de transmission de cellules de desserte dans toutes les combinaisons de bandes dans une plage de fréquences planifiée correspondant aux informations de planification dépasse le troisième débit de données.

2. Procédé selon la revendication 1, dans lequel la condition de débit comprend l'une ou plusieurs des conditions suivantes :

le débit de transmission pris en charge par le dispositif terminal dépasse un premier débit de données, dans lequel le premier débit de données est lié au surdébit spécifié ; ou
un débit de transmission de planification à porteuse unique pris en charge par le dispositif terminal dépasse un deuxième débit de données, dans lequel le deuxième débit de données est lié au surdébit spécifié.

3. Procédé selon la revendication 1 ou 2, dans lequel les premières informations de capacité indiquent que le dispositif terminal prend en charge le débit de transmission dans toute une plage de bandes ; ou

les premières informations de capacité indiquent que le dispositif terminal prend en charge le débit de transmission dans une ou plusieurs plages de fréquences prises en charge par le dispositif terminal ; ou
les premières informations de capacité indiquent que le dispositif terminal prend en charge le débit de transmission dans une ou plusieurs combinaisons de bandes prises en charge par le dispositif terminal ; ou
les premières informations de capacité indiquent que le dispositif terminal prend en charge le débit de transmission dans une ou plusieurs bandes prises en charge par le dispositif terminal ; ou
les premières informations de capacité indiquent que le dispositif terminal prend en charge le débit de transmission sur une ou plusieurs porteuses prises en charge par le dispositif terminal.

4. Procédé selon l'une quelconque des revendications 1 à 3, dans lequel les premières informations de capacité comprennent des premières informations de capacité de liaison montante et/ou des premières informations de capacité de liaison descendante ;

les premières informations de capacité de liaison montante indiquent qu'un débit de transmission de liaison montante pris en charge par le dispositif terminal satisfait à la condition de débit ou indiquent qu'un surdébit de liaison montante pris en charge par le dispositif terminal est inférieur au surdébit spécifié ; et
les premières informations de capacité de liaison descendante indiquent qu'un débit de transmission de liaison descendante pris en charge par le dispositif terminal satisfait à la condition de débit ou indiquent qu'un surdébit de liaison descendante pris en charge par le dispositif terminal est inférieur au surdébit spécifié.

5. Procédé de communication appliqué à un dispositif réseau, comprenant :

la réception de premières informations de capacité provenant d'un dispositif terminal, dans lequel les premières informations de capacité indiquent qu'un débit de transmission pris en charge par le dispositif terminal satisfait une condition de débit, dans lequel
la condition de débit comprend :

une somme de débits de transmission de cellules de desserte dans toutes les combinaisons de bandes dans une plage de fréquences planifiée prise en charge par le dispositif terminal dépasse un troisième débit de données, dans lequel le troisième débit de données est déterminé sur la base d'un surdébit spécifié 3GPP, dans lequel un débit de données est spécifié dans 3GPP 38.306 selon la formule

*débit de données (en Mbps) =*

$$10^{-6} \cdot \sum_{j=1}^{J} \left( v_{Layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot \left( 1 - OH^{(j)} \right) \right)$$

où J est une quantité de porteuses composantes dans une bande (bande) ou une combinaison de bandes, j représente chaque bande ou chaque combinaison de bandes, et $j$=1, 2, ..., ou $J$, $R_{max}$=948/1024,

$v_{Layers}^{(j)}$ eprésente un nombre maximum de couches prises en charge d'une porteuse composante j configurée par une couche supérieure, $\sqsupset^{(\square)}$ est un facteur d'échelle linéaire de la porteuse composante j configurée par la couche supérieure, qui est 1, 0,8, 0,75 ou 0,4, $\mu$ est une valeur correspondant à un espacement de sous-porteuses, la valeur de $\mu$ peut être 0, 1, 2 ou 3, qui correspond respectivement à un espacement de sous-porteuses de 15 kHz, un espacement de sous-porteuses de 30 kHz, un espacement de sous-porteuses de 60 kHz et un espacement de sous-porteuses de 120 kHz,

$$T_s^{\mu}$$

est une longueur moyenne de symboles de multiplexage orthogonal par répartition en fréquence dans une sous-trame correspondant à $\mu$, où $T_s^{\mu} = \dfrac{10^{-3}}{14 \cdot 2^{\mu}}$ . $OH^{(j)}$ est un surdébit de la porteuse composante j,

$$N_{PRB}^{BW^{(j)},\mu}$$

est une quantité maximale de blocs de ressources dans une bande passante de signal $BW^{(j)}$ de la porteuse composante j correspondant à $\Box$, et $\Box\Box^{(\Box)}$= 0,14 est le surdébit spécifié ;
le procédé comprend également :
l'envoi d'informations de planification au dispositif terminal sur la base des premières informations de capacité, dans lequel la somme de débits de transmission de cellules de desserte dans toutes les combinaisons de bandes dans une plage de fréquences planifiée correspondant aux informations de planification dépasse le troisième débit de données.

6.  Procédé selon la revendication 5,
    dans lequel
    la condition de débit comprend l'une ou plusieurs des conditions suivantes :

    le débit de transmission pris en charge par le dispositif terminal dépasse un premier débit de données, dans lequel le premier débit de données est lié au surdébit spécifié ; ou
    un débit de transmission de planification à porteuse unique pris en charge par le dispositif terminal dépasse un deuxième débit de données, dans lequel le deuxième débit de données est lié au surdébit spécifié.

7.  Procédé selon la revendication 5 ou 6, dans lequel les premières informations de capacité indiquent que le dispositif terminal prend en charge le débit de transmission dans toute une plage de bandes ; ou

    les premières informations de capacité indiquent que le dispositif terminal prend en charge le débit de transmission dans une ou plusieurs plages de fréquences prises en charge par le dispositif terminal ; ou
    les premières informations de capacité indiquent que le dispositif terminal prend en charge le débit de transmission dans une ou plusieurs combinaisons de bandes prises en charge par le dispositif terminal ; ou
    les premières informations de capacité indiquent que le dispositif terminal prend en charge le débit de transmission dans une ou plusieurs bandes prises en charge par le dispositif terminal ; ou
    les premières informations de capacité indiquent que le dispositif terminal prend en charge le débit de transmission sur une ou plusieurs porteuses prises en charge par le dispositif terminal.

8.  Procédé selon l'une quelconque des revendications 5 à 7, dans lequel les premières informations de capacité comprennent des premières informations de capacité de liaison montante et/ou des premières informations de capacité de liaison descendante ;

    les premières informations de capacité de liaison montante indiquent qu'un débit de transmission de liaison montante pris en charge par le dispositif terminal satisfait à la condition de débit ou indiquent qu'un surdébit de liaison montante pris en charge par le dispositif terminal est inférieur au surdébit spécifié ; et
    les premières informations de capacité de liaison descendante indiquent qu'un débit de transmission de liaison descendante pris en charge par le dispositif terminal satisfait à la condition de débit ou indiquent qu'un surdébit de liaison descendante pris en charge par le dispositif terminal est inférieur au surdébit spécifié.

9.  Appareil de communication, configuré pour réaliser le procédé selon l'une quelconque des revendications 1 à 8.

**10.** Produit de programme informatique comprenant des instructions qui, lorsqu'elles sont exécutées par un ordinateur, amènent l'ordinateur à réaliser le procédé selon l'une quelconque des revendications 1 à 8.

**11.** Puce, dans laquelle la puce est connectée à une mémoire ou la puce comprend la mémoire, et est configurée pour lire et exécuter des instructions stockées dans la mémoire, pour mettre en œuvre le procédé selon l'une quelconque des revendications 1 à 8.

**12.** Support de stockage lisible par ordinateur, comprenant des instructions, dans lequel, lorsque les instructions sont exécutées sur un ordinateur, l'ordinateur est activé pour réaliser le procédé selon l'une quelconque des revendications 1 à 8.

FIG. 1

FIG. 2

FIG. 3

FIG. 4

500

501

502

Communication
module

Processing module

FIG. 5

**REFERENCES CITED IN THE DESCRIPTION**

**Patent documents cited in the description**

- WO 2020076226 A1